# EUROPEAN PATENT SPECIFICATION

(11) **EP 0 933 243 B1**
(45) Date of publication and mention of the grant of the patent: **28.08.2002**
(21) Application number: 98308906.1
(22) Date of filing: 30.10.1998
(51) Int. Cl.: B60J 10/00, B29C 47/02

(54) **Sealing strips and methods of making them**
Dichtungsstreifen und Verfahren zu ihrer Herstellung
Bandes d'étanchéité et leur procédé de fabrication

(30) Priority: 03.02.1998 GB 9802315
(43) Date of publication of application: 04.08.1999
(73) Proprietor: GenCorp Property Inc., Sacramento, CA 95853-7012 (US)
(72) Inventor: Porpe, Christophe, 28600 Luisant (FR); Sans, Philppe, 28600 Luisant (FR)
(74) Representative: Foster, David Martyn

(56) References cited:
- EP-A- 0 689 952
- EP-A- 0 729 865
- EP-A- 0 814 229
- WO-A-94/26545
- FR-A- 2 593 445
- US-A- 2 546 049
- US-A- 3 110 938
- US-A- 4 864 774

## Description

The invention relates to a longitudinally extending sealing strip for mounting around the frame of an opening so as to be at least partially and sealingly compressed by a closure member for the opening, comprising a longitudinally extending base portion of extruded material, a longitudinally extending sealing portion of relatively soft extruded material and integrally extruded with the base portion, and a plurality of fixing means mounted on the base portion which are separate from the base portion but are located thereon at predetermined positions therealong so as to project from the base portion transversely to the length of the strip for engaging corresponding formations in the frame.

The invention also relates to a method of making a longitudinally extending sealing strip for mounting around the frame of an opening, comprising the steps of extruding a longitudinally extending base portion, integrally extruding a longitudinally extending sealing portion of relatively soft extruded material with the base portion, and mounting a plurality of fixing means on the base portion which are separate from the base portion but. are located thereon at predetermined positions therealong so as to project from the base portion transversely to the length of the strip for engaging corresponding formations in the frame.

Such a strip and method are known from GB-A-2 291 093. In this known strip and method, an elongate sealing portion has an adhesive strip applied to it providing an outwardly facing adhesive surface for securing the strip to a mounting surface. A plurality of protrusions are individually mounted on the adhesive surface for engaging respective holes in the mounting surface. With such an arrangement, it is important that the protruding members are accurately positioned along the length of the strip so as to be correctly aligned with the holes in the mounting strip. The invention is concerned with this problem.

According to the invention, the strip as first set forth above is characterised by a preformed longitudinally extending support member carrying the fixing means at predetermined positions therealong, the support member with the fixing means thereon being incorporated in the base portion during its extrusion, the fixing means being held on the support member by the extruded material of the base portion.

According to the invention, also, the method as first set forth above is characterised in that the step of mounting the fixing means on the base portion comprises the steps of pre-forming a longitudinally extending support member, mounting the fixing means on the support member at predetermined positions therealong, and incorporating the support member with the fixing means thereon in the base portion during its extrusion, the fixing means being held on the support member by the extruded material of the base portion.

Also according to the invention, there is provided apparatus for manufacturing a flexible longitudinally extending strip, characterised by storage means for storing a length of pre-formed longitudinally extending support member, means for progressively and longitudinally drawing off the support member from the storage means and feeding it along a predetermined path, assembly means for mounting a plurality of fixing means on the support member at predetermined longitudinally spaced intervals therealong so that each fixing means projects transversely to the length of the support member and to the path, and extrusion means in the path and downstream of the assembly means for longitudinally receiving the support member with the fixing means thereon and for extruding soft extruded material onto the support member to form a predetermined shape for the strip and at least partially to cover the support member and to secure the fixing means thereto so that the fixing means project transversely to the longitudinal extension of the strip for mounting the strip on mounting means.

Sealing strips embodying the invention, and methods according to the invention for making such strips, will now be described, by way of example, with reference to the accompanying diagrammatic drawings in which:
Figure 1 is a perspective view of one of the strips;
Figure 2 is a cross-section on the line II-II of Figure 4 showing also the strip of Fig. 1;
Figure 3 is a cross-section on the line III-III of Figure 4 showing also the strip of Fig. 1; Figure 4 is a perspective view of a support member used in the strip of Figure 1;
Figure 5 is an end view, to an enlarged scale, of the support member of Figure 4 showing a gripping pin in position thereon; and
Figure 6 is a side view of an extrusion line for producing the sealing strips.

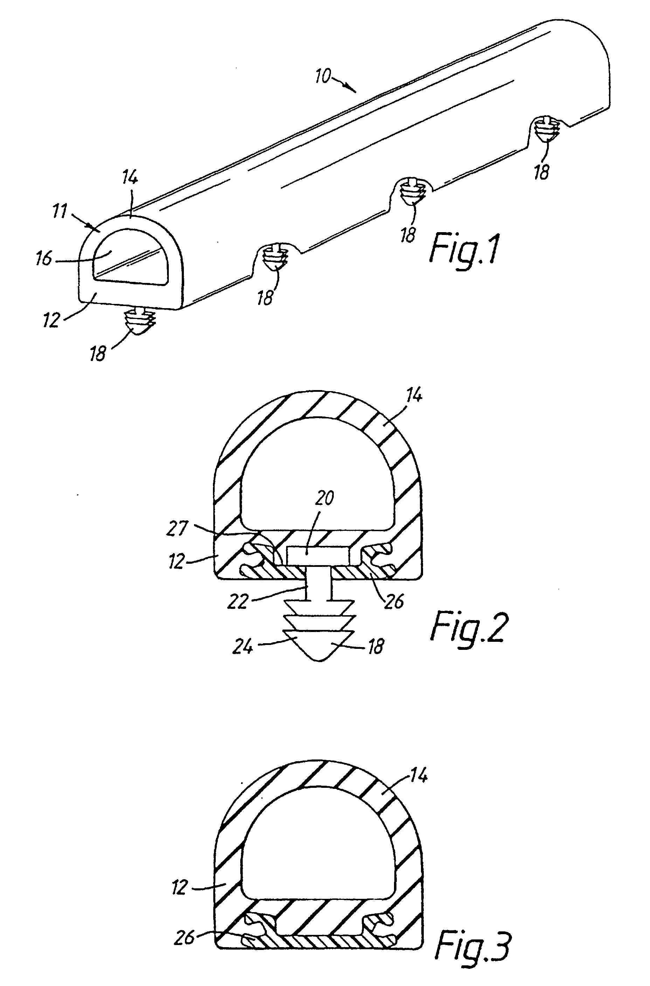

As shown in Figure 1, the strip 10 is of hollow tubular form. It is made of soft extruded material 11 such as rubber, plastics, pvc or similar material, the material 11 preferably being of cellular or foam form. The material 11 comprises a base part 12 and an integral curved part 14 defining a hollow interior 16.

The strip 10 carries gripping pins 18 extending downwardly from the base part 12 and positioned at intervals along the length of the strip. The strip is partly broken away in Figure 1 to show the pins 18 more clearly. By means of the pins 18, the strip can be mounted along the frame around an opening, such as a door opening, in a motor vehicle body, the pins 18 engaging suitably sized and pre-formed holes in the frame. In this way, the strip is so positioned that it becomes partially compressed by the closing door, thus forming a weather-tight seal around the edge of the door opening.

Each gripping pin comprises a head 20, an integrally extending body 22, and an enlarged end 24 which is shown in this example as being of serrated form. The pins 18 are made of relatively stiff material. However, the material is sufficiently resilient to enable the enlarged ends 24 of each pin to be forced through the respective mounting holes in the door frame, whereafter they resile to hold the strip 10 firmly in position.

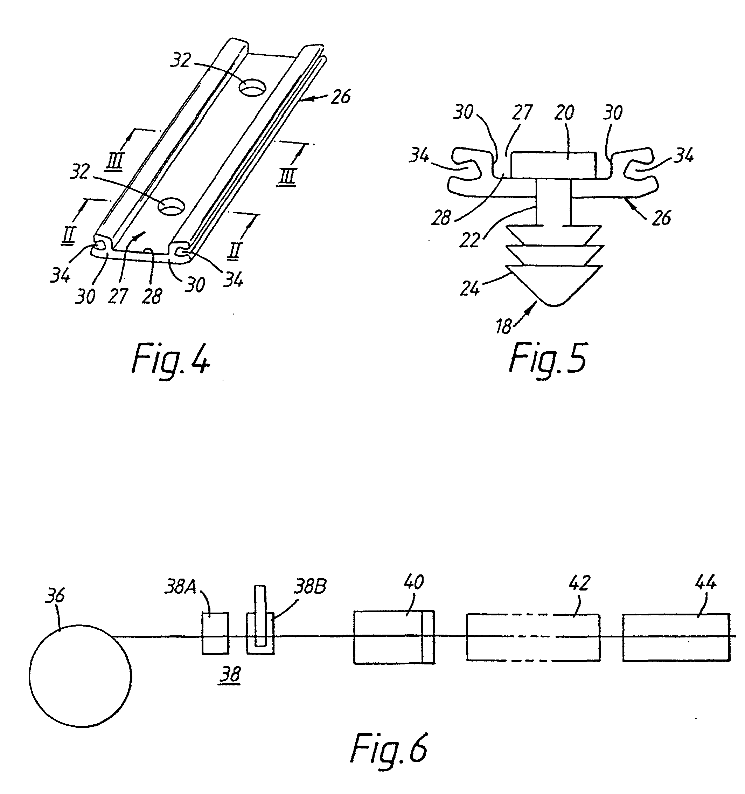

The gripping pins 18 are mounted on a longitudinally extending support member 26 which is embedded in the base part 12 and is not visible in Figure 1. The support member 26 is made of flexible material, such as suitable plastics material. Although the support member 26 is flexible, it is stiffer than the material 11 (Figure 1). The support member 26 is produced separately from and prior to the extrusion of the material 11 base part 12 and the curved part 14 (Figure 1), and may be produced in long lengths and stored. The support member 26 may be produced by extrusion. As shown in Figures 4 and 5, the support member 26 is in the form of a shallow channel 27 with a base 28 and side walls 30.

When the sealing strip is to be manufactured, an appropriate length of the support member 26, corresponding in length to the length of the sealing strip, is cut off the pre-stored length. It is then pierced, as shown at 32 in Figure 4, with holes which are spaced apart by the desired spacing, in the finished strip, of the gripping pins 18. This spacing will of course depend on the spacing of the pre-formed holes in the frame of the body opening. In this way, therefore, a pre-formed length of unpierced support member 26 can be cut off the store thereof and then pierced with the holes 32 to suit a particular application.

The gripping pins 18 are then mounted on the support member 26 as shown in Figure 5. As shown, the integral head 20 of the gripping pin sits on the base 28 within the shallow channel 27 of the support member 26. The material of the enlarged end 24 of the pin is sufficiently resilient to enable the end to be forced through the hole 32.

The support member 26, with the gripping pins 18 in position therealong, is then fed into a cross-head extruder. The extruder has a suitably shaped die for receiving the support member 26 with the pins 18 therein, and it is of course also shaped to match the desired shape of the base part 12 and the cover part 14 of the strip (Figure 1). Suitable plastics or rubber material is thus fed into the extruder, so as to form the base part 12 and the cover part 14 as shown in Figures 2 and 3. The extruded material 11 thus embeds the support member 26 and the gripping pins 18, the extruded material 11 filling channel 27 and securely locating the gripping pins 18.

The side walls 30 of the support member 26 are formed with small longitudinally extending external grooves 34. As shown in Figures 2 and 3, the extruded material 11 enters these grooves to form a "key", thus helping to secure the support member 26 firmly in position.

In this way, therefore, the finished strip 10 exits from the extruder with the gripping pins 18 firmly held in the correct positions. No separate operation is necessary after the extrusion process in order to fit the gripping pins in position. Furthermore, the use of a flexible but relatively stiff support member 26 ensures that the gripping pins 18 are located in the correct positions to match the holes in the vehicle bodywork.

Because the support strip 26, with the gripping pins 18 thereon. is secured into the extruded material 11 during the extrusion process, there is no risk of subsequent separation. In addition, the flexible, though relatively stiff, support member 26 provides dimensional stability for the lower part of the strip 10.

Figure 6 diagrammatically shows the manufacturing process.

A reel 36 supports an indefinite length of the support member 26 (Figure 4), but without the holes 32. The support strip 26 is drawn off the reel 36 and fed to a station 38. At stage 38A of the station 38, the holes 32 are formed in the correct positions. The stage 38A can be computer-controlled and programmed in accordance with the longitudinal speed of the support member 26 and the known spacing of the fixing holes in the vehicle bodywork to produce the holes 32 at the correct positions.

At a stage 38B, a suitable machine places one of the gripping pins 18 in each of the holes 32.

Station 40 is the cross-head extrusion station already described. Station 42 is a suitable vulcanising unit (if the extruded material 11 is rubber).

At station 44, the extruded strip 10 (Figure 1) is cut off into suitable lengths.

In a modification, the support member 26 is produced by a moulding operation and the gripping pins 18 are moulded integrally with the support member. The separate operation to assemble the pins in the support member is therefore not necessary.

## Claims

1. A longitudinally extending sealing strip for mounting around the frame of an opening so as to be at least partially and sealingly compressed by a closure member for the opening, comprising a longitudinally extending base portion (12) of extruded material, a longitudinally extending sealing portion (14) of relatively soft extruded material and integrally extruded with the base portion, and a plurality of fixing means (18) mounted on the base portion (12) which are separate from the base portion (12) but are located thereon at predetermined positions therealong so as to project from the base portion transversely to the length of the strip for engaging corresponding formations in the frame, **characterised by** a preformed longitudinally extending support member (26) carrying the fixing means at predetermined positions therealong, the support member (26) with the fixing means (18) thereon being incorporated in the base portion (12) during its extrusion, the fixing means (18) being held on the support member (26) by the extruded material of the base portion (12).

2. A strip according to claim 1, **characterised in that** the support member (26) is stiffer than the extruded material of the base portion (12).

3. A strip according to claim 1 or 2, **characterised in that** the support member (26) and the fixing means (18) are moulded.

4. A strip according to claim 3, **characterised in that** the support member (26) and the fixing means (18) are integrally moulded.

5. A strip according to claim 1 or 2, **characterised in that** the support member (26) is formed with a plurality of spaced locating means (32) for respectively locating the fixing means (18).

6. A strip according to claim 5, **characterised in that** the locating means (32) are holes in the support member (26).

7. A strip according to claim 6, **characterised in that** the support member (26) is of channel-shape (27) and the holes (32) are positioned in and extend through the base (28) of the channel (27).

8. A strip according to any one of claims 5 to 7, **characterised in that** the support member (26) is extruded.

9. A strip according to any preceding claim, **characterised in that** the fixing means are respective pins (18).

10. A strip according to any one of claims 5 to 8, **characterised in that** the fixing means are respective pins (18), and **in that** each pin has an enlarged head (20) for locating it on the support member (26), the enlarged heads (20) being held on the support member by the extruded material of the base portion (12).

11. A strip according to claim 9 or 10, **characterised in that** the projecting parts of the pins (18) project to respective enlarged ends (24).

12. A strip according to claim 5, **characterised in that** each fixing means is a respective pin (18) having an enlarged head (20) and a projecting part projecting from the head to an enlarged end (24), and **in that** each pin (18) is mounted in a respective one of the holes (32) in the base (28) of the channel (27) of the support member (26) so that the head (20) lies in the base of the channel.

13. A strip according to claim 11 or 12, **characterised in that** the material of each pin (18) is sufficiently resilient to enable the enlarged end (24) to be distorted whereby it can engage with a corresponding formation on the mounting means and thereafter resiles to engage with the formation.

14. A strip according to any preceding claim, **characterised in that** the extruded relatively soft material comprises foamed or cellular material.

15. A strip according to any preceding claim, **characterised in that** the base portion (12) and the sealing portion (14) together define a hollow interior for the strip.

16. A method of making a longitudinally extending sealing strip for mounting around the frame of an opening, comprising the steps of extruding a longitudinally extending base portion (12), integrally extruding a longitudinally extending sealing portion (14) of relatively soft extruded material with the base portion, and mounting a plurality of fixing means (18) on the base portion (12) which are separate from the base portion (12) but are located thereon at predetermined positions therealong so as to project from the base portion transversely to the length of the strip for engaging corresponding formations in the frame, **characterised in that** the step of mounting the fixing means (18) on the base portion (12) comprises the steps of pre-forming a longitudinally extending support member (26), mounting the fixing means on the support member (26) at predetermined positions therealong, and incorporating the support member (26) with the fixing means (18) thereon in the base portion (12) during its extrusion, the fixing means (18) being held on the support member (26) by the extruded material of the base portion (12).

17. A method according to claim 16, **characterised in that** the support member is stiffer than the extruded material of the base portion (12).

18. A method according to claim 16 or 17, **characterised in that** the support member (26) and the fixing means (18) are produced by moulding.

19. A method according to claim 16 or 17, **characterised in that** the support member (26) is formed with a plurality of spaced locating means (32) for respectively locating the fixing means (18).

20. A method according to claim 19, **characterised in that** the support member (26) is of channel-shape (27) and the locating means are holes (32) positioned in and extending through the base (28) of the channel.

21. A method according to claim 19 or 20, **characterised in that** the support member (26) is extruded.

22. Apparatus for manufacturing a flexible longitudinally extending strip, **characterised by** storage means (36) for storing a length of pre-formed longitudinally extending support member (26), means for progressively and longitudinally drawing off the support member (26) from the storage means (36) and feeding it along a predetermined path, assembly means (38) for mounting a plurality of fixing means (18) on the support member (26) at predetermined longitudinally spaced intervals therealong so that each fixing means (18) projects transversely to the length of the support member (26) and to the path, and extrusion means (40) in the path and downstream of the assembly means (38) for longitudinally receiving the support member (26) with the fixing means (18) thereon and for extruding soft extruded material (12) onto the support member (26) to form a predetermined shape for the strip (10) and at least partially to cover the support member (26) and to secure the fixing means (18) thereto so that the fixing means project transversely to the longitudinal extension of the strip (10) for mounting the strip on mounting means.

23. Apparatus according to claim 20 for use where the extruded material is rubber, **characterised by** vulcanising means (42) downstream of the extrusion means (40).

24. Apparatus according to claim 22 or 23, **characterised by** cutting means (44) downstream of the extrusion means (40) for cutting the strip into predetermined length.

## Patentansprüche

1. Der Länge nach erstreckende Dichtungsleiste, die so um den Rahmen einer Öffnung anzuordnen ist, dass diese zumindest teilweise und abdichtend durch ein Schließelement für die Öffnung zusammengedrückt wird, mit einem sich der Länge nach erstreckenden Basisbereich (12) aus einem extrudierten Material, einem sich der Länge nach erstreckenden Dichtbereich (14) aus einem relativ weichen und einstückig mit dem Basisbereich extrudierten Material sowie mit einer Vielzahl von an dem Basisbereich (12) befestigten Befestigungsmitteln (18), die von dem Basisbereich (12) separiert, aber darauf an vorbestimmten Stellen daran entlang so angeordnet sind, dass sie quer zur Länge der Leiste von dem Basisbereich vorstehen, um mit korrespondierenden Formationen im Rahmen in Eingriff zu treten,
**gekennzeichnet durch**
ein vorgeformtes, sich der Länge nach erstreckendes Tragelement (26), das die Befestigungsmittel an den vorbestimmten Stellen daran entlang trägt, wobei das Tragelement (26) mit den daran angeordneten Befestigungsmitteln in den Basisbereich (12) während dessen Extrudierens eingearbeitet wird und die Befestigungsmittel (18) **durch** das extrudierte Material des Basisbereichs (12) auf dem Tragelement (26) gehalten werden.

2. Dichtungsleiste nach Anspruch 1, **dadurch gekennzeichnet, dass** das Tragelement (26) steifer ist als das extrudierte Material des Basisbereichs (12).

3. Dichtungsleiste nach Anspruch 1 oder 2, **dadurch gekennzeichnet, dass** das Tragelement (26) und die Befestigungsmittel (18) in einer Form hergestellt sind.

4. Dichtungsleiste nach Anspruch 3, **dadurch gekennzeichnet, dass** das Tragelement (26) und die Befestigungsmittel (18) einstückig in einer Form hergestellt sind.

5. Dichtungsleiste nach Anspruch 1 oder 2, **dadurch gekennzeichnet, dass** das Tragelement (26) mit einer Vielzahl von beabstandeten Aufnahmemitteln (32) zum entsprechenden Befestigen der Befestigungsmittel (18) in einer Form hergestellt ist.

6. Dichtungsleiste nach Anspruch 5, **dadurch gekennzeichnet, dass** die Aufnahmemittel (32) Löcher in dem Tragelement (26) sind.

7. Dichtungsleiste nach Anspruch 6, **dadurch gekennzeichnet, dass** das Tragelement (26) kanalfömig (27) ausgebildet ist und die Löcher (32) in der Basis (28) des Kanals (27) positioniert sind und sich durch die Basis (28) des Kanals (27) erstrecken.

8. Dichtungsleiste nach einem der Ansprüche 5 bis 7, **dadurch gekennzeichnet, dass** das Tragelement (26) extrudiert ist.

9. Dichtungsleiste nach einem der vorhergehenden Ansprüche, **dadurch gekennzeichnet, dass** die Befestigungsmittel einzelne Stifte (18) sind.

10. Dichtungsleiste nach einem der Ansprüche 5 bis 8, **dadurch gekennzeichnet, dass** die Befestigungsmittel einzelne Stifte (18) sind und dadurch, dass jeder Stift einen vergrößerten Kopf (20) aufweist, um den Stift auf den Tragelement (26) zu befestigen, wobei die vergrößerten Köpfe (20) durch das extrudierte Material des Basisbereichs (12) auf dem Tragelement (26) gehalten werden.

11. Dichtungsleiste nach Anspruch 9 oder 10, **dadurch gekennzeichnet, dass** die vorspringenden Teile der Stifte (18) zu einzelnen vergrößerten Enden (24) hervorstehen.

12. Dichtungsleiste nach Anspruch 5, **dadurch gekennzeichnet, dass** jedes Befestigungsmittel ein einzelner Stift (18) ist, der einen vergrößerten Kopf (20) und einen hervorspringenden Teil aufweist, der von dem Kopf zu einem vergrößerten Ende (24) vorspringt und dadurch, dass jeder Stift (18) in einem jeweiligen Loch (32) so in der Basis (28) des Kanals (27) des Tragelements (26) befestigt ist, dass der Kopf (20) in der Basis des Kanals liegt.

13. Dichtungsleiste nach Anspruch 11 oder 12, **dadurch gekennzeichnet, dass** das Material jedes Stiftes (18) ausreichend elastisch ist, um dem vergrößerten Ende zu ermöglichen verformt zu werden, wodurch dieses mit einer entsprechenden Ausgestaltung auf den Montagemitteln in Eingriff tritt und danach zurückschnellt, um mit der Formation in Eingriff zu treten.

14. Dichtungsleiste nach einem der vorhergehenden Ansprüche, **dadurch gekennzeichnet, dass** extrudierte, relativ weiche Material geschäumtes oder zelluläres Material umfaßt.

15. Dichtungsleiste nach einem der vorhergehenden Ansprüche, **dadurch gekennzeichnet, dass** der Basisbereich (12) und der Dichtungsbereich (14) zusammen ein hohles Inneres für die Leiste bilden.

16. Verfahren zum Herstellen einer sich der Länge nach erstreckende Dichtungsleiste, die um den Rahmen einer Öffnung anzuordnen ist, mit den Verfahrensschritten Extrudieren eines sich der Länge nach erstreckenden Basisbereichs (12), einstückiges Extrudieren zusammen mit dem Basisbereich eines sich der Länge nach erstreckenden Dichtbereichs (14) aus einem relativ weichen extrudierten Material und Befestigen einer Vielzahl von Befestigungsmitteln (18) an dem Basisbereich (12), die von dem Basisbereich (12) separiert sind, jedoch darauf an vorbestimmten Stellen daran entlang positioniert sind, um quer zur Länge der Leiste von dem Basisbereich vorzustehen, um mit korrespondierenden Formationen im Rahmen in Eingriff zu treten,
**dadurch gekennzeichnet,**
**dass** der Verfahrensschritt des Befestigens der Befestigungsmittel (18) an dem Basisbereich (12) die Verfahrensschritte Vorformen eines sich der Länge nach erstreckenden Tragelements (26), Befestigen der Befestigungsmittel an dem Tragelement (26) daran entlang an vorbestimmten Stellen und Einarbeiten des Tragelements (26) mit den darauf angeordneten Befestigungsmitteln (18) in den Basisbereich (12) während dessen Extrudierens umfaßt, wobei die Befestigungsmittel (18) durch das extrudierte Material des Basisbereichs (12) auf dem Tragelement (26) gehalten werden.

17. Verfahren nach Anspruch 16, **dadurch gekennzeichnet, dass** das Tragelement steifer ist als das extrudierte Material des Basisbereichs (12).

18. Verfahren nach Anspruch 16 oder 17, **dadurch gekennzeichnet, dass** das Tragelement (26) und die Befestigungsmittel (18) in einer Form hergestellt werden.

19. Verfahren nach Anspruch 16 oder 17, **dadurch gekennzeichnet, dass** das Tragelement (26) mit einer Vielzahl von beabstandeten Aufnahmemitteln (32) zum entsprechenden Befestigen der Befestigungsmittel (18) in einer Form hergestellt wird.

20. Verfahren nach Anspruch 19, **dadurch gekennzeichnet, dass** das Tragelement (26) kanalfömig (27) ausgebildet ist und die Aufnahmemittel Löcher (32) sind, die in der Basis (28) des Kanals (27) positioniert sind und sich durch die Basis (28) des Kanals (27) erstrecken.

21. Verfahren nach Anspruch 19 oder 20, **dadurch gekennzeichnet, dass** das Tragelement (26) extrudiert wird.

22. Vorrichtung zum Herstellen einer flexiblen, sich der Länge nach erstreckenden Leiste,
**gekennzeichnet durch**
ein Speichermittel (36) zum Speichern einer Länge eines vorgeformten, sich der Länge nach erstreckenden Tragelements (26), Mittel, um das Tragelement (26) schrittweise der Länge nach aus dem Speichermittel (36) zu ziehen und entlang einem vorbestimmten Weg zu führen, Montagemittel (38) zum Befestigen einer Vielzahl von Befestigungsmitteln (18) an vorbestimmten Stellen in voneinander beabstandeten Intervallen so an dem Tragelement (26) entlang, dass jedes Befestigungsmittel (18) quer zur Länge des Tragelements (26) und zu dem Weg hervorsteht und **durch** Extrudiermittel (40) im Verlauf dieses Weges und dem Montagemittel (38) nachgeschaltet, um das Tragelement (26) mit den darauf angeordneten Befestigungsmitteln (18) der Länge nach aufzunehmen und, um weiches extrudiertes Material auf das Tragelement (26) zu extrudieren, um eine vorbestimmte Form für die Leiste (10) zu bilden und das Tragelement (26) wenigstens teilweise abzudecken, sowie, um die Befestigungsmittel (18) so daran zu befestigen, dass die Befestigungsmittel quer zur Längserstreckung der Leiste (10) vorstehen, um die Leiste an Montagemitteln zu befestigen.

23. Vorrichtung nach Anspruch 22 zur Verwendung, wenn das extrudierte Material Gummi ist, **gekennzeichnet durch** dem Extrudiermittel (40) nachgeschaltete Vulkanisiermittel (42).

24. Vorrichtung nach Anspruch 22 oder 23, **gekennzeichnet durch** dem Extrudiermittel (40) nachgeschaltete Schneidmittel (44), um die Leiste in vorbestimmte Längen zu schneiden.

## Revendications

1. Bande d'étanchéité s'étendant longitudinalement pour un montage autour du cadre d'une ouverture afin d'être comprimée au moins partiellement et de manière étanche par un élément de fermeture pour l'ouverture, comportant une partie de base s'étendant longitudinalement (12) en matière extrudée, une partie d'étanchéité s'étendant longitudinalement (14) en matière extrudée relativement souple et extrudée intégralement avec la partie de base, et plusieurs moyens de fixation (18) montés sur la partie de base (12) qui sont séparés de la partie de base (12) mais sont disposés dessus dans des positions prédéterminées tout le long de façon à dépasser de la partie de base transversalement à la longueur de la bande afin d'engager des formations correspondantes dans le cadre, **caractérisée par** un élément de support préformé s'étendant longitudinalement (26) supportant les moyens de fixation dans des positions prédéterminées tout le long, l'élément de support (26) avec les moyens de fixation (18) dessus étant incorporé dans la partie de base (12) pendant son extrusion, les moyens de fixation (18) étant maintenus sur l'élément de support (26) par la matière extrudée de la partie de base (12).

2. Bande selon la revendication 1, **caractérisée en ce que** l'élément de support (26) est plus raide que la matière extrudée de la partie de base (12).

3. Bande selon la revendication 1 ou 2, **caractérisée en ce que** l'élément de support (26) et les moyens de fixation (18) sont moulés.

4. Bande selon la revendication 3, **caractérisée en ce que** l'élément de support (26) et les moyens de fixation (18) sont moulés intégralement.

5. Bande selon la revendication 1 ou 2, **caractérisée en ce que** l'élément de support (26) est formé avec plusieurs moyens de positionnement espacés (32) destinés à positionner de manière respective les moyens de fixation (18).

6. Bande selon la revendication 5, **caractérisée en ce que** les moyens de positionnement (32) sont des trous dans l'élément de support (26).

7. Bande selon la revendication 6, **caractérisée en ce que** l'élément de support (26) est en forme de canal (27) et les trous (32) sont placés dans et s'étendant à travers la base (28) du canal (27).

8. Bande selon l'une quelconque des revendications 5 à 7, **caractérisée en ce que** l'élément de support (26) est extrudé.

9. Bande selon l'une quelconque des revendications précédentes, **caractérisée en ce que** les moyens de fixation sont des axes respectifs (18).

10. Bande selon l'une quelconque des revendications 5 à 8, **caractérisée en ce que** les moyens de fixation sont des axes respectifs (18), et **en ce que** chaque axe a une tête agrandie (20) afin de le positionner sur l'élément de support (26), les têtes agrandies (20) étant retenues sur l'élément de support par la matière extrudée de la partie de base (12).

11. Bande selon la revendication 9 ou 10, **caractérisée en ce que** les parties saillantes des axes (18) dépassent vers des extrémités agrandies respectives (24).

12. Bande selon la revendication 5, **caractérisée en ce que** chacun des moyens de fixation est un axe respectif (18) ayant une tête agrandie (20) et une partie saillante qui dépasse de la tête vers une extrémité agrandie (24), et ***en* ce que** chaque axe (18) est monté dans un trou respectif des trous (32) dans la base (28) du canal (27) de l'élément de support (26) de telle sorte que la tête (20) se trouve dans la base du canal.

13. Bande selon la revendication 11 ou 12, **caractérisée en ce que** la matière de chaque axe (18) est suffisamment élastique pour permettre à l'extrémité agrandie (24) d'être déformée de sorte qu'elle puisse engager une formation correspondante sur les moyens de montage et ensuite revenir élastiquement afin d'engager la formation.

14. Bande selon l'une quelconque des revendications précédentes, **caractérisée en ce que** la matière relativement souple extrudée comprend de la matière en mousse ou cellulaire.

15. Bande selon l'une quelconque des revendications précédentes, **caractérisée en ce que** la partie de base (12) et la partie d'étanchéité (14) définissent ensemble un intérieur creux pour la bande.

16. Procédé de fabrication d'une bande d'étanchéité s'étendant longitudinalement pour un montage autour du cadre d'une ouverture, comportant les étapes consistant à extruder une partie de base s'étendant longitudinalement (12), extruder intégralement une partie d'étanchéité s'étendant longitudinalement (14) en matière extrudée relativement souple avec la partie de base, et monter plusieurs moyens de fixation (18) sur la partie de base (12) qui sont séparés de la partie de base (12) mais sont disposés dessus dans des positions prédéterminées tout le long de façon à dépasser de la partie de base transversalement à la longueur de la bande afin d'engager des formations correspondantes dans le cadre, **caractérisé en ce que** l'étape de montage des moyens de fixation (18) sur la partie de base (12) comporte les étapes consistant à préformer un élément de support s'étendant longitudinalement (26), monter les moyens de fixation sur l'élément de support (26) dans des positions prédéterminées tout le long, et incorporer l'élément de support (26) avec les moyens de fixation (18) dessus dans la partie de base (12) pendant son extrusion, les moyens de fixation (18) étant retenus sur l'élément de support (26) par la matière extrudée de la partie de base (12).

17. Procédé selon 1a revendication 16, **caractérisé en ce que** l'élément de support est plus raide que la matière extrudée de la partie de base (12).

18. Procédé selon la revendication 16 ou 17,
**caractérisé en ce que** l'élément de support (26) et les moyens de fixation (18) sont fabriqués par moulage.

19. Procédé selon la revendication 16 ou 17,
**caractérisé en ce que** l'élément de support (26) est formé avec plusieurs moyens de positionnement espacés (32) afin de positionner de manière respective les moyens de fixation (18).

20. Procédé selon la revendication 19, **caractérisé en ce que** l'élément de support (26) est en forme de canal (27) et les moyens de positionnement sont des trous (32) positionnés dans et s'étendant à travers la base (28) du canal.

21. Procédé selon la revendication 19 ou 20,
**caractérisé en ce que** l'élément de support (26) est extrudé.

22. Appareil pour la fabrication d'une bande flexible s'étendant longitudinalement, **caractérisé par** des moyens de stockage (36) destinés à stocker une longueur d'élément de support s'étendant longitudinalement préformé (26), des moyens destinés à retirer progressivement et longitudinalement l'élément de support (26) des moyens de stockage (36) et le délivrer le long d'un passage prédéterminé, des moyens d'assemblage (38) destinés à monter plusieurs moyens de fixation (18) sur l'élément de support (26) à des intervalles longitudinalement espacés prédéterminés tout le long de telle sorte que chacun des moyens de fixation (18) dépasse transversalement à la longueur de l'élément de support (26) et au passage, et des moyens d'extrusion (40) dans le passage et en aval des moyens d'assemblage (38) afin de recevoir longitudinalement l'élément de support (26) avec les moyens de fixation (18) dessus et extruder une matière extrudée souple (12) sur l'élément de support (26) de façon à former une forme prédéterminée pour la bande (10) et recouvrir au moins partiellement l'élément de support (26) et fixer les moyens de fixation (18) dessus de telle sorte que les moyens de fixation dépassent transversalement à l'extension longitudinale de la bande (10) pour montage de la bande sur les moyens de montage.

23. Appareil selon la revendication 20 pour une utilisation lorsque la matière extrudée est du caoutchouc, **caractérisé par** des moyens de vulcanisation (42) en aval des moyens d'extrusion (40).

24. Appareil selon la revendication 22 ou 23,
**caractérisé par** des moyens de coupe (44) en aval des moyens d'extrusion (40) afin de couper la bande à la longueur prédéterminée.
